# EUROPÄISCHE PATENTSCHRIFT

(11) **EP 2 185 881 B1**
(45) Veröffentlichungstag und Bekanntmachung des Hinweises auf die Patenterteilung: **13.07.2011**
(21) Anmeldenummer: 08747884.8
(22) Anmeldetag: 09.05.2008
(51) Int. Cl.: F27B 1/20, C21B 7/20, C22B 7/04, F27D 3/00

(54) **VERFAHREN ZUM AUFARBEITEN VON METALLOXIDHÄLTIGEN STÄUBEN ODER SCHLACKEN SOWIE VORRICHTUNG ZUR DURCHFÜHRUNG DIESES VERFAHRENS**
METHOD FOR WORKING UP METAL OXIDE-CONTAINING DUSTS OR SLAG AND DEVICE FOR CARRYING OUT THIS METHOD
PROCÉDÉ DE TRAITEMENT DE POUSSIÈRES OU DE SCORIES CONTENANT DES OXYDES MÉTALLIQUES, ET DISPOSITIF POUR METTRE EN OEUVRE LE PROCÉDÉ

(30) Priorität: 21.05.2007 AT 7942007
(43) Veröffentlichungstag der Anmeldung: 19.05.2010
(73) Patentinhaber: SGL Carbon SE, 65203 Wiesbaden (DE)
(72) Erfinder: EDLINGER, Alfred, A-6780 Bartholomäberg (AT)
(74) Vertreter: Haffner und Keschmann Patentanwälte OG
(86) Internationale Anmeldenummer: PCT/AT2008/000162
(87) Internationale Veröffentlichungsnummer: WO 2008/141347

(56) Entgegenhaltungen:
- WO-A-2006/079132
- DE-A1- 3 908 787
- NL-C- 78 586

## Beschreibung

Die Erfindung bezieht sich auf ein Verfahren zum Aufarbeiten von metalloxidhältigen Organika, Stäuben, Schlämmen oder Schlacken mit einem beheizten säulenförmigen Koksbett, aus welchem in axialer Richtung nach dem kopfseitigen Aufgabeende Reaktionsgase abgezogen und am Fuß Schmelze abgestochen werden, sowie eine Vorrichtung zur Durchführung dieses Verfahrens.

In der WO 2006/079132 A1 wurde bereits ein Verfahren zum Reduzieren von metalloxidhaltigen Schlacken bzw. Gläsern und/oder Entgasen von mineralischen Schmelzen sowie eine entsprechende Vorrichtung zur Durchführung dieses Verfahrens vorgeschlagen, bei welcher die schmelzflüssigen Schlacken auf ein induktiv beheiztes Koksbett aufgegeben wurden, wobei die Charge einem im Wesentlichen abgeschlossenen Schachtreaktor zugeführt wurde und das Koksbett induktiv auf Temperaturen aufgeheizt wurde, welche sicherstellen sollten, dass sich bis zum Abstichende eine Schmelze ausbildet oder die Schmelztemperatur aufrecht erhalten wird. Bei dieser bekannten Vorrichtung wurde in unterschiedlichen axialen Teilbereichen des Schachtofens Sauerstoff zugeführt und der Schachtofen in verschiedenen Teilbereichen mit verschiedenen Frequenzen und verschiedener Energie induktiv beheizt. Das Redoxpotential des Bettes bzw. der Säule konnte bei dieser bekannten Einrichtung durch Einblasen von Gasen geregelt werden, wobei die bekannte Vorrichtung axial aufeinander folgende Abschnitte aufwies, welche mit gesonderten Temperaturmesseinrichtungen und/oder Messeinrichtungen für die elektrische Leistungsaufnahme ausgestattet waren, um auf diese Weise eine entsprechende Regelung der Temperatur in den einzelnen Abschnitten zu gewährleisten. Wesentlich für die bekannte Vorrichtung war, dass die elektrische Energie unmittelbar in das Koksbett eingebracht wurde, wobei die Wände bzw. das Gehäuse selbst aus Feuerfestmaterial ausgebildet waren, welches unter Anwendung der elektrischen Energie nicht aufgeheizt wurde und somit isolierend über denjenigen Temperaturbereich ausgebildet war, welcher im Bereich der Gehäusewände zu erwarten war. Das Gehäuse selbst war ebenso wie die Induktionskörper bzw. Induktionsspulen gekühlt ausgebildet, da ja die Induktionswärme durch die entsprechend leitfähigen Kokspartikel sichergestellt wurde.

Aus der älteren österreichischen Anmeldung GM 35/2007 ist ein Verfahren bzw. eine Einrichtung der beschriebenen Art zu entnehmen, bei welcher beliebige Einsatzmaterialien wie verzinkter Schrott, mit Organika belasteter Walzwerkzunder, zinkhaltige Stäube, Klärschlammverbrennungsasche, welche P₂O₅, Fe₂O₃, CaO, Al₂O₃, ZnO etc. enthalten können, und Elektroschrott in einfacher Weise aufgearbeitet werden können und Schadstoffe ohne Ausbildung von internen Kreisläufen nahezu quantitativ abgezogen werden können. Weiters sollte das Verfahren so durchgeführt werden, dass auf die geschlossene Ausbildung eines Kupolofens verzichtet werden kann und ein einfacher Schacht mit offenem kalten Aufgabeende zum Einsatz gelangen kann, ohne dass an dieser Stelle der Austritt von Schadstoffen befürchtet werden muss. Durch die bekannte Verwendung von isolierenden Werkstoffen für die Feuerfestauskleidung bzw. den Mantel des Schachts sollte wiederum sichergestellt werden, dass die elektrische Energie lediglich im Bereich des Koksbetts zur Wirkung gelangt.

In diesem Zusammenhang wurde ausgehend von dem eingangs genannten Verfahren vorgeschlagen, dass Reaktionsgase in einem axialen Bereich des Koksbettes unterhalb eines kopfseitigen Induktionskörpers, welcher dazu geeignet ist, das Koksbett auf die Zündtemperatur des Kohlenstoffs zu bringen, abzusaugen und den Metall-Regulus sowie die Schlackenschmelze am unteren Ende des Koksbettes abzustechen. Dadurch, dass das Reaktionsgas in einem axialen Bereich des Koksbetts zwischen zwei Induktionskörpern abgesaugt wurde und der Metall-Regulus und die Schlackenschmelze am unteren Ende des Koksbetts abgestochen wurden, wurde im Inneren der Kokssäule eine Gasführung erzielt, bei welcher ausgehend vom kalten Aufgabeende Reaktionsgase zu der Absaugöffnung angesaugt werden und somit in einem ersten axialen Teilbereich im Gleichstrom mit der Charge geführt werden, wohingegen eine weitere Teilmenge der Reaktionsgase vom heißen Abstichende her gleichfalls zur Absaugöffnung hin gesaugt wird, sodass in diesem zweiten axialen Teilbereich des Koksbetts bzw. der Kokssäule die Gase im Gegenstrom zur Schmelze geführt werden. Eine derartige Gasführung hat den Vorteil, dass der Anteil hochviskoser heißer Gase wesentlich verringert werden kann und die im Bereich des Abstichendes noch gebildeten Gase ihre fühlbare Wärme im Gegenstrom zur absinkenden Schmelze bzw. der Kokssäule abbauen können. Der Bereich unterhalb des genannten Induktionskörpers zeichnet sich somit durch eine Temperatur aus, die geringer ist als die Temperatur des Koksbetts am Abstichende, aber andererseits deutlich höher ist als die Gastemperatur am kalten Aufgabeende, sodass durch geeignete Wahl der Position der Absaugöffnung tatsächlich in jedem Punkt sichergestellt werden kann, dass mit Schadstoffen belastete Gase zuverlässig abgesaugt werden können, und eine Kondensation der kreislaufbildenden Verbindungen im Koksbett vermieden werden kann.

Weiters wurde vorgeschlagen, das Verfahren so durchzuführen, dass die Temperatur, bei der das Reaktionsgas unter Anwendung von Unterdruck abgezogen wird, oberhalb des Kondensationspunktes von abzutrennenden Schadstoffen und insbesondere oberhalb von 910° C liegt. Eine Temperatur oberhalb von 910° C wurde hierbei in Hinblick auf Zinkdämpfe gewählt, deren Kondensationspunkt bei 907° C unter Atmosphärendruck liegt. Wenn lediglich Phosphordampf als Schadstoff vorliegt, kann die Absaugtemperatur entsprechend niedriger und über 290°C gewählt werden. Die Absaugöffnung wurde hierbei unter leichten Unterdruck gesetzt, wobei neben Zinkdampf auch Phosphordampf abgesaugt werden konnte. Durch entsprechende Einstellung der Temperatur, bei welcher die Absaugung erfolgt, ließ sich eine Reihe von Schadstoffen selektiv absaugen, wodurch die Anzahl der möglichen Chargen wesentlich erhöht wurde, da es nunmehr möglich wurde, auch Problemstoffe, welche Zink, Kohlenstoff, Kohlenwasserstoffe, Alkalien, Halogene, Blei, Cadmium, Quecksilber, Phosphor oder organische Pyrolyseprodukte enthalten, entsprechend aufzuarbeiten. Insbesondere feste Abfallstoffe weisen bei thermischer Vorbehandlung zumeist einen hohen Anteil flüchtiger Substanzen auf, wobei neben den genannten Metalldämpfen vor allen Dingen Zink- und Cadmiumkondensation, Alkalihalogene sowie Teerkondensation in Schachtöfen als problematisch einzustufen sind und zu unerwünschten Kreisläufen führen. Durch die beschriebene Absaugung wurde eine derartige pyrometallurgische Raffination in einem Schachtofen problemlos möglich, wobei der Gasabzug prinzipiell im Bereich oberhalb der Kondensationstemperatur der jeweils relevanten flüchtigen Schadstoffe liegen sollte. Die Koks- und Gasvorwärmung auf diese jeweilige Zieltemperatur erfolgte hierbei im Gleichstrombereich, d.h. in demjenigen Bereich, in welchem die Charge und die Gase gleichsinnig durch das Koksbett geleitet werden. Erst die weitere Schmelzreduktion erfolgt anschließend im Gegenstrombereich, wobei dieser für die beiden Bereiche gemeinsame Gasabzug die interne Kreislaufbildung verhindert.

Das abgezogene Reaktionsgas konnte bevorzugt einem Gasreformer zugeführt werden, in welchem beispielsweise der heiße Zinkdampf mit dem eingespritzten Wasser in endothermer Reaktion zu Zinkoxid und H₂ umgesetzt wird, wodurch ein entsprechend gereinigtes, abgekühltes Gas mit hohem Heizwert gebildet werden konnte. Die unterschiedlichen axialen Teilbereiche des Koksbetts bzw. der Kokssäule konnten bevorzugt so betrieben werden, dass der kopfseitige Induktionskörper mit einer Frequenz von 20 - 120 kHz und ein dem Abstichende benachbarter Induktionskörper vorgesehen war, welcher mit einer Frequenz von 1 - 10 kHz betrieben wird. Auf diese Weise wurde dem Umstand Rechnung getragen, dass im Gleichstrombereich, in welchem eine Reduktion noch nicht in hohem Ausmaß erfolgt, die Ankopplung an oxidische Bestandteile höhere Frequenzen erfordert als die Ankopplung im Reduktionsbereich, in welchem bereits hohe Mengen an metallischen Schmelzen und Koks höherer Temperatur vorliegen, welche bei niedrigeren Frequenzen ankoppeln. Durch diese Maßnahme kann der Energieverbrauch an die jeweils tatsächlichen Bedürfnisse angepasst werden.

Die Erfindung zielt nun darauf ab, die Vorwärmung von Koks in einem derartigen Verfahren bzw. einer derartigen Vorrichtung zu verbessern und wirtschaftlich günstiger zu gestalten. Insbesondere zielt die Erfindung darauf ab, die für die Ankopplung an kalten Koks erforderlichen hohen Frequenzen zu vermeiden, da die benötigte Ankoppelungsfrequenz des Kokses mit steigender Kokstemperatur sinkt. Schließlich zielt die Erfindung darauf ab, auch bei der Aufgabe von Kaltgut, und insbesondere kalten Stäuben sowie von Shredder-Leicht-Fraktion, eine möglichst rasche und effiziente Umsetzung zu gewährleisten und weiters die Möglichkeit zu schaffen, im Verfahren gebildete Gase, und insbesondere deren fühlbare Wärmeeffizienz, zu nutzen. Schließlich soll durch die erfindungsgemäße Verfahrensführung der Abzug von unterschiedlichen Wertstoffen an verschiedenen Stellen in reinerer Form ermöglicht werden und gleichzeitig die Voraussetzung geschaffen werden, durch entsprechende Einstellung der Verfahrensparameter ein fraktioniertes Reduzieren von Metallen zu ermöglichen.

Zur Lösung dieser Aufgabe besteht das erfindungsgemäße Verfahren gemäβ Anspruch 1 im wesentlichen darin, dass das säulenförmige Koksbett in einem ersten Teilbereich seiner axialen Länge als Koksring um eine zentrale Aufgabeöffnung angeordnet wird, dass der Koksring beheizt wird und dass die Aufgabe der festen Stäube oder der Schmelze unterhalb der Aufgabeebene für Koks in den Koksring in das heiße Koksbett vorgenommen wird. Dadurch, dass ein Koksring geschaffen wird, in welchem eine zentrale Aufgabeöffnung angeordnet ist, gelingt es, die zentrale Aufgabeöffnung ringförmig mit Koks zu umgeben, welcher einer karbothermischen Vorwärmung unterzogen werden kann. Die Vorwärmung in diesem Teilbereich der axialen Länge führt nun dazu, dass unmittelbar glühender Koks am Grund der zentralen Aufgabeöffnung und damit an der Stelle zur Verfügung steht, an welcher Eduktstaub bzw. die ggf. auch schmelzflüssig vorliegende Charge aufgebracht wird. An dieser Stelle liegt somit bereits Koks mit entsprechend hoher Temperatur und glühend vor, sodass eine rasche Umsetzung erzielt wird und in der Folge die Gasführung in der Kokssäule entsprechend optimiert werden kann. Der die zentrale Aufgabeöffnung umgebende Koks kann in konventioneller Weise und insbesondere karbothermisch beheizt werden, sodass auf die Verwendung von schlecht ankoppelnden und extrem hochfrequenten Wechselstrom verzichtet werden kann. Es wird hierbei so vorgegangen, dass der die Aufgabeöffnung umgebende Koksring durch heiße Verbrennungsabgase, Heißwind und/oder Sauerstoff sowie erforderlichenfalls zusätzlichen, im Koksring verbrannten Brennstoff beheizt wird. Prinzipiell kann die Vorwärmung mit Gichtgasen oder Verbrennungsabgasen erfolgen, sofern auf diese Weise die gewünschten hohen Temperaturen von etwa 1100° C bis 1700°C erzielbar sind. Zusätzlich kann naturgemäß auch Brennstoff, und insbesondere gasförmiger Brennstoff oder andere Kohlenwasserstoffe eingedüst werden, welche gemeinsam mit Heißluft oder Heißwind und ggf. mit Sauerstoff in diesem Vorwärmebereich, d.h. dem die Aufgabeöffnung konzentrisch umgebenden Ringraum, verbrannt werden können, um den Koksring entsprechend vorzuheizen. Eine induktive Vorheizung des Kokses hatte zwar den Vorteil, dass auch in diesem Bereich der Kokssäule ein entsprechend hohes Reduktionspotential zur Verfügung steht. Die karbothermische Vorwärmung, und insbesondere der Einsatz von Brennstoffen im Bereich der Vorwärmung, führt zu einem geringeren Redoxpotential dieses Bereichs. Da die Charge aber erst nach der Vorwärmung des Kokses mit dem glühenden Koks in Kontakt tritt, was durch die zentrale Aufgabeöffnung sichergestellt wird, steht an dieser Stelle das maximale Redoxpotential zur Verfügung, wodurch eine besonders rasche Umsetzung gewährleistet ist.

Um die jeweils erforderliche kontinuierliche bzw. diskontinuierliche Aufgabe von Koks zu ermöglichen, wird das Verfahren vorteilhaft so durchgeführt, dass der den Koksring enthaltende Ringschacht an seinem kopfseitigen Aufgabeende druckfest verschlossen wird. Die Aufgabeöffnung für die metalloxidhältigen Stäube oder Schmelzen bedarf in der Regel keines druckfesten Verschlusses. In unmittelbarer Nähe des kopfseitigen Aufgabeendes mit dem druckfesten Verschluss für den Ringschacht erfolgt auch der Abzug der Verbrennungsabgase bzw. Verbrennungsgase, die zur Aufwärmung des Kokses eingesetzt oder gebildet wurden. Der druckfeste Verschluss für die Kokschargierung kann in einfacher Weise als Schleuse und beispielsweise als Zellradschleuse oder Glockenschleuse ausgebildet sein.

Prinzipiell kann es im Rahmen des erfindungsgemäßen Verfahrens vorteilhaft sein, die Schmelze, und insbesondere die zunächst gebildete Schlackenschmelze, welche in der Folge durch Koks reduziert wird, dünnflüssiger zu machen. Zu diesem Zweck kann, wie es einer bevorzugten Durchführungsweise des erfindungsgemäßen Verfahrens entspricht, so vorgegangen werden, dass mit der Charge und/oder in den Koksring saure Additive chargiert werden.

Prinzipiell wird mit Vorteil die Charge über die zentrale Aufgabeöffnung im Bereich einer Kokstemperatur von über 600° C, insbesondere über 1000° C aufgegeben, wobei mit Vorteil Heißwind und/oder Sauerstoff in wenigstens einer Ebene in das Koksbett eingeblasen wird, welche der Unterkante des Koksrings entspricht oder unterhalb dieser Unterkante liegt.

Die im Rahmen des erfindungsgemäßen Verfahrens einsetzbaren Stäube enthalten in aller Regel im Wesentlichen Fe₂O₃, CaO, SiO₂, MgO, Na₂O, K₂O, Cr₂O₃, Mn₂O₃, MoₓO_{y}, NiO, ZnO, NaCl, NaF, P₂O₅, ZnCl₂, ZnF₂, PbF₂, PbCl₂, C, CₓH_{y}, Cu₂O, V₂O oder WO₃. Im Gasabzug nahe der Aufgabe der Charge, d.h. bei Temperaturen von ungefähr 1100° C, werden in erster Linie die leicht flüchtigen Komponenten wie Zink, Phosphor sowie Alkalihalogenide und Bleihalogenide abgezogen, wobei die Alkalihalogenide und Bleihalogenide die vergleichsweise höchsten Verdampfungstemperaturen aufweisen. Ebenso kann CₓH_{y} bei Temperaturen von über 600° C in aller Regel zu H₂ und C umgewandelt werden, wobei der Kohlenstoff in der Folge als Reduktionskohlenstoff in der Kokssäule zur Verfügung steht. Oxidische Anteile verschlacken und werden anschließend reduziert. Alkalien werden in Anwesenheit von sauren Additiven zu Natrium oder Kaliumsilikat umgesetzt und SiO₂ in der Regel nicht reduziert, sofern die Reduktionsstrecke nicht relativ lang gewählt wird.

Das Reduktionspotential der Kokssäule kann durch Einblasen von ggf. heißen Gasen entsprechend eingestellt werden, wobei ein entsprechend geringeres Reduktionspotential durch Einblasen von Sauerstoff erzielt werden kann.

Erfindungsgemäß ist es nun mit Rücksicht auf die umfangreichen Einstellmöglichkeiten besonders vorteilhaft, das Verfahren so durchzuführen, dass es kaskadierend in mehreren aufeinander folgenden Verfahrensstufen in voneinander getrennten säulenförmigen Koksbetten mit jeweils ansteigendem Reduktionspotential zur fraktionierten Gewinnung von Metallschmelzen durchgeführt wird. Auf diese Weise ist es beispielsweise möglich, in einer ersten Verfahrensstufe eine Kupferschmelze zu erzielen und die verbleibende Schlacke in einer zweiten Verfahrensstufe bis zur Erzielung eines Nickelbades zu reduzieren, worauf schließlich die wiederum verbleibende Schlacke in einer dritten, entsprechend stärker reduzierend eingestellten Verfahrensstufe bis zur Reduktion eines metallischen Eisenbads fortgesetzt werden kann. Letztlich kann SiO₂ zu Si reduziert werden.

Wenn, wie es einer bevorzugten Durchführung des Verfahrens entspricht, so vorgegangen wird, dass der Eduktstaub bzw. die Charge vor der Aufgabe in den Ringschacht-Koksofen mit sauren Additiven unter oxidierenden Bedingungen insbesondere bei Temperaturen zwischen 1100° C und 1300° C kalziniert werden, wird eine weitestgehende Entfernung von Halogenen, Blei und Alkalien erzielt.

Die erfindungsgemäße Vorrichtung gemäβ Anspruch 8 zur Durchführung dieses Verfahrens mit einem Reaktor mit einer beheizbaren Kokssäule, einem kopfseitigen Aufgabeende für die Charge und einem kopfseitigen Aufgabeende für Koks sowie wenigstens einer verschließbaren Abstichöffnung für Metall- und/oder Schlackenschmelze ist im wesentlichen dadurch gekennzeichnet, dass am kopfseitigen Ende ein zentraler Aufgaberaum für die Charge ausgebildet ist, der von einem Ringraum für die Aufnahme von Koks umgeben ist, dass an den Koks-Ringraum Düsen für Heißwind, Sauerstoff und/oder heiße Verbrennungsabgase sowie ggf. Brennstoffe angeschlossen sind, dass der Koks-Ringraum an seinem kopfseitigen kalten Ende eine druckfeste Schleuse aufweist und dass an den Reaktor an oder unterhalb der Unterkante des Koks-Ringraums Absaugleitungen für Reaktionsgase angeschlossen sind. Wesentlich für eine sichere Vorwärmung des aufzugebenden Kokses ist die Ausbildung eines Ringraums, welcher in besonders einfacher Weise durch einen rohrförmigen Einsatz, welcher die Aufgabeöffnung umgibt, erzielt werden kann. Im ersten Teilbereich der axialen Länge des Reaktors liegt somit eine mehrwandige Struktur vor, wobei der außenliegende Ringraum entsprechend mit Koks beschickt wird und druckfest abschließbar sein soll, und der innenliegende Aufgaberaum selbst wiederum von einem Hohlschacht gebildet werden kann, dessen Mantel mehrwandig ausgebildet ist und mindestens teilweise mit Eduktstaub und Additiven gefüllt sein kann, welche in der Folge gleichfalls auf das glühende Kohlebett ausgetragen werden können. Die Füllung mit Eduktstaub und Additiven führt zur Vorwärmung dieses Anteils, der dann gleichzeitig eine hohe Temperaturbeständigkeit des Hohlschachts gewährleistet.

Für die fraktionierte Absaugung verschiedener Verbindungen, welche ohne Abzug unerwünschte Kreisläufe ausbilden würden, ist es möglich, in einer ersten Ebene Kohlenmonoxid abzuziehen und in einer darunter liegenden Ebene mit entsprechend höherer Temperatur Zinkoxid gemeinsam mit Kohlenmonoxid auszutragen. Die jeweiligen Gasabsaugleitungen sind hierbei bevorzugt an Ringräume angeschlossen, welche durch stufenweises Vergrößern der lichten Weite des Reaktors ausgebildet sind, wobei an den Reaktor in Höhenrichtung aufeinanderfolgend eine Mehrzahl derartiger Gaszuführungungs- und/oder Gassaugleitungen angeschlossen sein kann.

Die Schleuse für die Aufgabe von Koks in den Koksringraum kann bevorzugt als Doppelglockenverschluss ausgebildet sein, wodurch auch bei geschlossener Schleuse die Absaugung von abgekühlten Verbrennungsgasen oder Verbrennungsabgasen wie CO₂ bei Temperaturen von etwa 200 - 400° C im Bereich der Aufgabe gelingt. Wie bereits erwähnt, ist es besonders vorteilhaft, eine Reihe von Reaktoren kaskadierend hintereinander anzuordnen, um bei Einstellung des entsprechenden Reduktionspotentials unterschiedliche Metallschmelzen in aufeinanderfolgenden Reaktoren auszubilden. Um sicherzustellen, dass unerwünschte Kreisläufe verhindert werden, ist die Ausbildung mit Vorteil so getroffen, dass Absaugleitungen in Bereichen des Reaktors unter einem Unterdruck angeschlossen sind, der einen Gasstrom von oben und unten in die Absaugleitung ergibt.

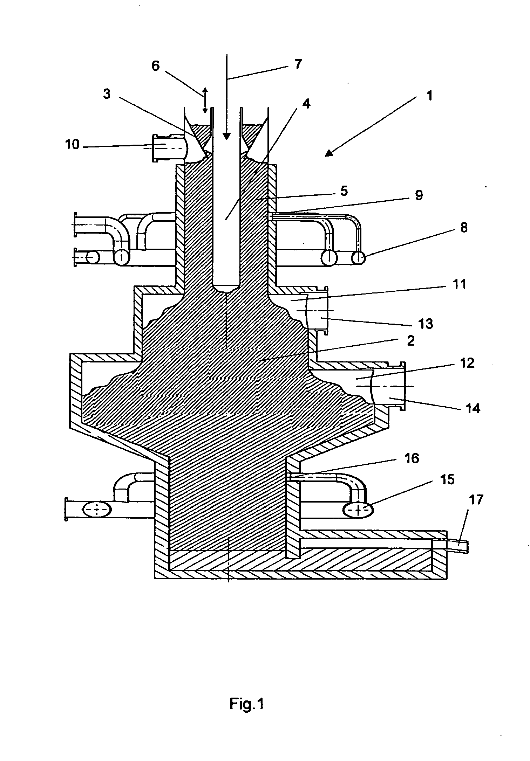

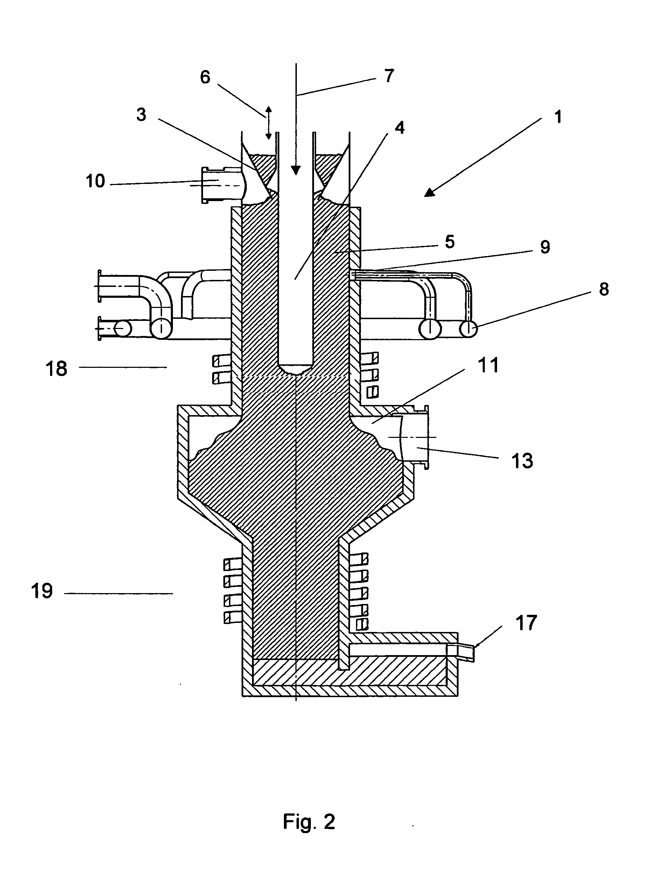

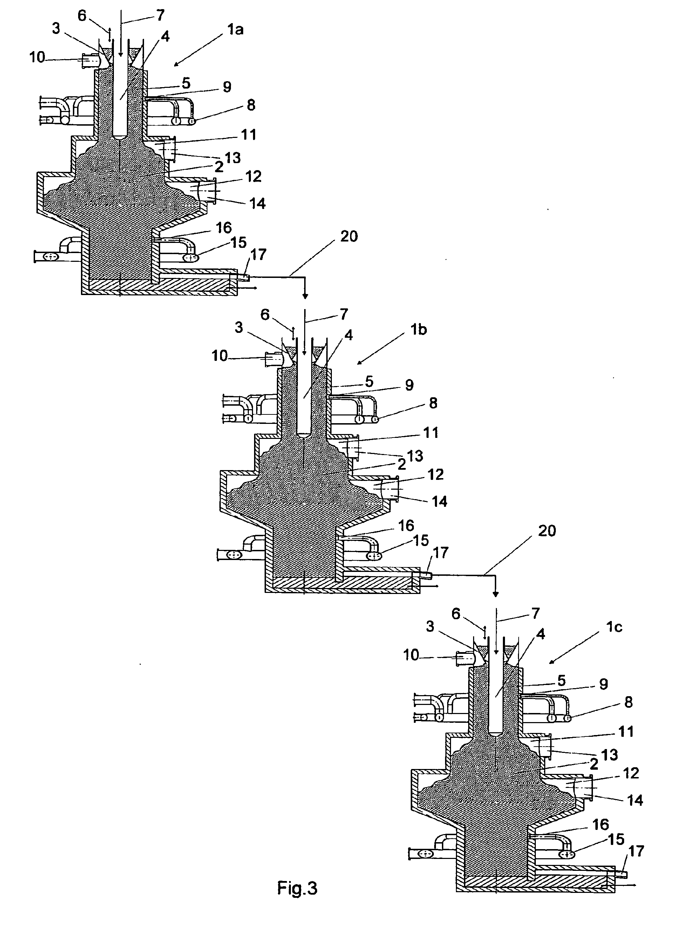

Die Erfindung wird nachfolgend anhand von in der Zeichnung schematisch dargestellten Ausführungsbeispielen näher erläutert. In dieser zeigen Fig.1 eine erste Ausbildung einer erfindungsgemäßen Vorrichtung zur Durchführung des Verfahrens, Fig.2 eine abgewandelte Ausbildung, bei welcher im Anschluss an eine karbothermische Vorwärmung des Koksrings eine induktive Beheizung vorgesehen ist, und Fig.3 die kaskadenartige Anordnung von Vorrichtungen entsprechend der Fig.1 zur Erzielung hochreiner Metallschmelzen durch fraktionierte Reduktion.

In Fig.1 ist mit 1 ein Reaktor bezeichnet, in welchem eine Kokssäule 2 angeordnet ist. Der Koks wird über eine Schleuse 3 in einen den zentralen Aufgaberaum 4 umgebenden Ringraum 5 aufgegeben, wobei die Schleuse 3 als Doppelglockenverschluss ausgebildet ist, deren oberer Teil in Richtung des Doppelpfeils 6 in Höhenrichtung verschiebbar ist, um die Schleuse zu öffnen oder zu schließen. In den zentralen Aufgaberaum 4 erfolgt die Aufgabe der Charge in Richtung des Pfeils 7, wobei diese Charge an einem Punkt an der Unterkante des Ringraums 5 auf der Kokssäule auftrifft, an welchem der Koks bereits auf entsprechend hohe Temperaturen aufgeheizt ist. Zur Aufheizung der Kokssäule im Ringraum 5 ist eine Ringrohrleitung 8 vorgesehen, aus welcher über Düsen 9 Heißluft bzw. Heißwind, Sauerstoff, Verbrennungsgase oder auch Brennstoffe zugeführt werden können, welche im Inneren des Koksringraums 5 die Erhitzung auf Temperaturen bis etwa 1100° C gewährleisten. Die gebildeten Verbrennungsabgase oder Brenngase werden über den Absaugstutzen 10 abgesaugt.

Der Reaktor ist in Achsrichtung mehrfach stufenweise sich vergrößernd ausgebildet, wobei jeweils bei einer stufenweisen Vergrößerung Ringräume 11 bzw. 12 ausgebildet werden, aus welchen über Absaugstutzen bzw. Absaugleitungen 13 bzw. 14 Gase abgezogen werden können. Über das Rohrleitungssystem 15 kann weiterer Heißwind über Düsen 16 am Fuß des Reaktors eingestoßen werden, sodass sich im Inneren eine entsprechende Strömung ergibt, welche im ersten Teilbereich bis zu den Ringkammern 11 und ggf. bis zu den Ringkammern 12 im Gegenstrom zur herunterfallenden Schlackenschmelze bzw. Metallschmelze geführt wird, und nur im oberen Bereich im Gleichstrom zu den über das Rohrleitungssystem 8 zugeführten Gasen. Insgesamt kann beispielsweise über den Rohrstutzen 13 Kohlenmonoxid und über den Rohrstutzen 14 Zinkoxid sowie Kohlenmonoxid abgesaugt werden, wobei je nach durch Einblasen entsprechender Gase über das Rohrleitungssystem 15 eingestelltem Redoxpotential eine entsprechende Schlacke gebildet wird und ein Metallbad beispielsweise über die Abstichöffnung bzw. den Abstich 17 abgezogen werden kann.

Die Ausbildung nach Fig.2 unterscheidet sich von der Ausbildung nach Fig.1 im Wesentlichen dadurch, dass im Anschluss an den ersten ringförmigen Bereich, in welchem der Koksring vorgewärmt wird, eine induktive Erhitzung des bereits heißen Kokses erfolgt, um die gewünschten hohen Temperaturen aufrechtzuerhalten. Zu diesem Zweck sind in einem ersten Teilbereich 18 eine entsprechende Manschette bzw. ein Induktionskörper für das Einbringen elektrischer Energie vorgesehen, wobei im Teilbereich 18 mit höherer Frequenz eingekoppelt wird als in dem nachfolgenden, dem Abstich 17 benachbarten Teilbereich 19. Auch hier wird aus einem entsprechenden Ringraum 11 über einen Anschluss 13 Gas abgezogen, wobei im Fall der Ausbildung nach Fig.2 hier Zinkdämpfe oder Zinkchloride gemeinsam mit Zinnchloriden abgezogen werden können.

Über die Gaszufuhr 9 kann Reinsauerstoff eingeblasen werden, um die gewünschte Erhitzung und Vorwärmung zu gewährleisten. Eine entsprechende Vorwärmung gelingt aber bei entsprechend hoher Frequenz auch durch Erhitzen über die Wicklungen im Teilbereich 18, wobei hier eine entsprechend geringere Vorwärmung ausreichen würde, wenn nachfolgend mit Sauerstoff nachverbrannt wird. Die Vorwärmung erfolgt hierbei naturgemäß im Gegenstrom, wohingegen die Verflüchtigung von Zinkdämpfen, Zinkchlorid bzw. das Abziehen von Kohlenmonoxid in Gleichstrombereichen erfolgt, an welche wiederum ein im Gegenstrom begaster Schmelzreduktionsbereich anschließt, welcher im Fall der Ausbildung nach Fig.2 von den Spulen im Teilbereich 19 umschlossen ist.

Bei der Ausbildung nach Fig.3 ist nun eine Mehrzahl von Reaktoren entsprechend der Fig.1 kaskadierend hintereinander angeordnet, wobei die Bezugszeichen der Fig.1 beibehalten wurden. Aus dem ersten derartigen Reaktor 1a kann nun, bei entsprechend gewählter Temperatur und entsprechend gewählter Gaszufuhr zur Einstellung des Reduktionspotentials über das Rohrleitungssystem 15, Kupfer metallisch abgezogen werden, wobei die schmelzflüssige Schlacke unmittelbar über die Leitung 20 dem nachfolgenden Reaktor 1b aufgegeben werden kann. Auch hier kann die Einstellung, und insbesondere die Einstellung des Redoxpotentials, so getroffen werden, dass keine vollständige Reduktion erfolgt, sodass beispielsweise ein Nickelbad abgezogen werden kann und die verbleibende Schlacke wiederum über eine Leitung 20 dem dritten Reaktor 1c aufgegeben werden kann. Wenn in diesem dritten Reaktor 1c entsprechend stärker reduzierende Bedingungen eingestellt werden, kann hier nunmehr beispielsweise Eisenschmelze abgezogen werden, sodass durch die kaskadierende Anordnung einer Mehrzahl derartiger Reaktoren eine fraktionierte Reduktion von flüssigen Metallen möglich wird.

## Patentansprüche

1. Verfahren zum Aufarbeiten von metalloxidhältigen Stäuben oder Schlacken mit einem induktiv beheizten, säulenförmigen Rokebett, aus welchem in axialer Richtung nach dem kopfseitigen Aufgabeende Reaktionsgase abgezogen und am Fuß Schmelze abgestochen werden, **dadurch gekennzeichnet, dass** das säulenförmige Koksbett in einem ersten Teilbereich seiner axialen Länge als Koksring um eine zentrale Aufgabeöffnung angeordnet wird, dass der Koksring beheizt wird, dass die Aufgabe der festen Stäube oder der ggf. auch Schmelflüssig vorliegenden Charge unterhalb der Aufgabeebene für Koks in den Koksring in das heiße Koksbett vorgenommen wird und dass der die Aufgabeöffnung umgebende Koksring durch heiße Verbrennungsabgase, Heißwind und/oder Sauerstoff sowie erforderlichenfalls zusätzliche, im Koksring verbrannten Brennstoff beheizt wird.

2. Verfahren nach Anspruch 1, **dadurch gekennzeichnet, dass** mit einer aufzuarbeitenden Charge und/oder in den Koksring saure Additive chargiert werden.

3. Verfahren nach einem der Ansprüche 1 oder 2, **dadurch gekennzeichnet, dass** die Charge über die zentrale Aufgabeöffnung im. Bereich einer Kokstemperatur von über 500°C, insbesondere über 1000° C aufgegeben wird.

4. Verfahren nach einem der Ansprüche 1, 2 oder 3, **dadurch gekennzeichnet, dass** Heißwind oder Sauerstoff in wenigstens einer Ebene in das Koksbett eingeblasen wird, welche der Unterkante des Koksrings entspricht oder unterhalb dieser Unterkante liegt.

5. Verfahren nach einem der Ansprüche 1 bis 4, **dadurch gekennzeichnet, dass** das Reduktionspotential der Kokssäule durch Einblasen von heißen Gasen eingestellt wird.

6. Verfahren nach einem der Ansprüche 1 bis 5, **dadurch gekennzeichnet, dass** das Verfahren kaskadierend in mehreren aufeinander folgenden Verfahrensstufen in voneinander getrennten säulenförmigen Koksbetten mit jeweils ansteigendem Reduktionspotential zur fraktionierten Gewinnung von Metallschmelzen durchgeführt wird.

7. Verfahren nach einem der Ansprüche 1 bis 6, **dadurch gekennzeichnet, dass** der Staub (z.B. Eduktstaub) bzw. die Charge vor der Aufgabe in den Ringschacht-Koksofen mit sauren Additiven unter oxidierenden Bedingungen insbesondere bei Temperaturen zwischen 1100° C und 1300° C kalziniert werden.

8. Vorrichtung zur Durchführung des Verfahrens nach einem der Ansprüche 1 bis 7 mit einem Reaktor mit einer induktiv beheizbaren Kokssäule, einem kopfseitigen Aufgabeende für die Charge und einem kopfseitigen Aufgabeende für Koks sowie wenigstens einer verschließbaren Abstichöffnung für Metall- und/oder schlackenschmelze, **dadurch gekennzeichnet, dass** am kopfseitigen Ende ein zentraler Aufgaberaum (4) für die Charge ausgebildet ist, der von einem Ringraum (5) für die Aufnahme von Koks umgeben ist, dass an den Koks-Ringraum (5) Düsen (9) für Heißwind, Sauerstoff und/oder heiße Verbrennungsabgase sowie ggf. Brennstoffe angeschlossen sind und dass der Koks-Ringraum (5) an seinem kopfseitigen kalten Ende eine druckfeste schleuse (3) aufweist und dass an den Reaktor an oder unterhalb der unterkante des Koks-Ringraums (5) Absaugleitungen (13) für Reaktionsgase angeschlossen sind.

9. Vorrichtung nach Anspruch 8, **dadurch gekennzeichnet, dass** an den Reaktor (1) in Höhenrichtung aufeinanderfolgend eine Mehrzahl von Gaszuführungs- (8,15) und Gasabsaugleitungen (13,14) angeschlossen ist.

10. Vorrichtung nach Anspruch 8 oder 9, **dadurch gekennzeichnet, dass** die Gasabsaugleitungen (13,14) an Ringräume angeschlossen sind, welche durch stufenweises Vergrößern der lichten Weite des Reaktors (1) ausgebildet sind.

11. Vorrichtung nach Anspruch 8, 9, oder 10, **dadurch gekennzeichnet, dass** die druckfeste Schleuse (3) als Doppelglockenverschluse ausgebildet ist.

12. Vorrichtung nach einem der Ansprüche 9 bis 11, **dadurch gekennzeichnet, dass** eine Mehrzahl von Reaktoren (1a, 1b, 1c) kaskadierend hintereinander angeordnet ist.

13. Vorrichtung nach einem der Ansprüche 9 bis 12, **dadurch gekennzeichnet, dass** Absaugleitungen (13,14) in Bereichen des Reaktors (1) unter einem Unterdruck angeschlossen sind, der einen Gasstrom von oben und unten in die Absaugleitung (13,14) ergibt.

## Claims

1. A method for processing metal-oxide-containing dusts or slags using an inductively heated, column-shaped coke bed from which reaction gases are drawn off downstream of the top charging end, viewed in the axial direction, and melt is tapped from the bottom, **characterized in that** the column-shaped coke bed is arranged as a coke ring about a central charging opening in a first partial region of its axial length, that the coke ring is heated, that the charging of the solid dusts or of the inert charge, which is optionally present in the molten state, into the hot coke bed is performed below the charging end for coke into the coke ring, and that the coke ring surrounding the charging opening is heated by hot combustion gases, hot blast and/or oxygen as well as, if required, additional fuel burned in the coke ring.

2. A method according to claim 1, **characterized in that** acid additives are charged together with a charge to be processed, and/or into the coke ring.

3. A method according to any one of claim 1 or 2, **characterized in that** the charge is charged via the central charging opening in the region of a coke temperature of more than 500°C and, in particular, more than 1000°C.

4. A method according to any one of claim 1, 2 or 3, **characterized in that** hot blast or oxygen is blown into the coke bed on at least a level that corresponds to the lower edge of the coke ring or lies below said lower edge.

5. A method according to any one of claims 1 to 4, **characterized in that** the reduction potential of the coke column is adjusted by blowing in hot gases.

6. A method according to any one of claims 1 to 5, **characterized in that** the method is performed in a cascading manner in several successive method steps in mutually separated column-shaped coke beds having respectively increasing reduction potentials so as to produce metal melts in a fractionated manner.

7. A method according to any one of claims 1 to 6, **characterized in that** the dust (e.g. starting material dust) and/or the charge is calcined by acid additives under oxidizing conditions and, in particular, at temperature between 1100°C and 1300°C prior to being charged into the annular shaft coke furnace.

8. A device for carrying out the method according to any one of claims 1 to 7, including a reactor containing an inductively heatable coke column, a top-side charging end for the charge and a top-side charging end for coke as well as at least one closeable tap opening for metal and/or slag melts, **characterized in that**, on the top end, a central charging space (4) for the charge is formed, which is surrounded by an annular space (5) for receiving coke, that nozzles (9) for hot blast, oxygen and/or hot combustion gases as well as, if required, fuels are connected to the annular coke space (5), and that the annular coke space (5) comprises a pressure-resistant lock (3) on its cold top end, and that exhaust pipes (13) for reaction gases are connected to the reactor on or below the lower edge of the annular coke space (5).

9. A device according to claim 8, **characterized in that** a plurality of gas supply pipes (8, 15) and gas exhaust pipes (13, 14) are connected to the reactor (1) in a vertically consecutive manner.

10. A device according to claim 8 or 9, **characterized in that** the gas exhaust pipes (13, 14) are connected to annular spaces formed by the stepwise increase in the clear width of the reactor (1).

11. A device according to claim 8, 9 or 10, **characterized in that** the pressure-proof lock (3) is configured as a double-shed lock.

12. A device according to any one of claims 9 to 11, **characterized in that** a plurality of reactors (1a, 1b, 1c) are consecutively arranged in a cascading manner.

13. A device according to any one of claims 9 to 12, **characterized in that** exhaust pipes (13, 14) are connected in regions of the reactor (1) under a negative pressure resulting in a gas flow into the exhaust pipe (13, 14) from top and from bottom.

## Revendications

1. Procédé pour traiter des poussières ou des scories contenant des oxydes métalliques avec un lit de coke en forme de colonne, chauffé par induction, à partir duquel des gaz de réaction sont extraits dans une direction axiale après l'extrémité de chargement côté tête et une coulée est soutirée au pied, **caractérise en ce qu'**il comporte les étapes consistant à disposer le lit de coke en forme de colonne dans une première zone partielle de sa longueur axiale, sous forme d'anneau de coke autour d'une couverture centrale de chargement, chauffer l'anneau de coke, procécer au chargement dans le lit de coke chaud des poussières solides ou de la charge présente à l'état inerte ou également en fusion sous le plan de chargement du coke dans l'anneau de coke, et chauffer l'anneau de coke entourant l'ouverture de chargement au moyen de gaz de combustion chauds, d'un vent chaud et/ou d'oxygène ainsi que d'un combustible supplémentaire brûlé dans l'anneau de coke, si nécessaire.

2. Procédé selon la revendication 1, **caractérisé en ce qu'**il comporte l'étape consistant à charger une charge à traiteur et/ou des additifs acides dans l'anneau de coke,

3. Procédé selon l'une quelconque des revendications 1 ou 2, **caractérisé en ce que** la charge est chargée au-dessus de l'ouverture centrale de chargement dans la plage d'une température de coke supérieure à 500 °C, en particulier supérieure à 1 000 °C.

4. Procédé selon l'une quelconque des revendications 1, 2 ou 3, **caractérisé ce qu'**un vent chaud ou de l'oxygène est insufflé dans au moins un plan dans le lit de coke, lequel plan correspond au bord inférieur de l'anneau de coke ou se situe sous ce bord inférieur.

5. Procédé selon l'une quelconque des revendications 1 à 4, **caractérisé en ce que** le potentiel de réduction de la colonne de coke est ajusté en insufflant des gaz chauds.

6. Procédé selon l'une quelconque des revendications 1 à 5, **caractérisé en ce que** le procédé est mis en oeuvre en cascade en plusieurs étapes de procédé succensives, dans des lits de coke en forme de colonnes séparés les uns des autres, avec un potentiel de réduction respectivement croissant afin d'obtenir des coulées de métal fractionnées.

7. Procédé selon l'une quelconque des revendications 1 à 6, **caractérisé en ce que** la poussière (produit de départ sous forme de poussière, par exemple) ou la charge est calcinée avant le chargement dans le four à coke à cuve annulaire en utilisant des additifs acides sous conditions oxydantes, en particulier à des températures comprises entre 1 100 °C et 1 300 °C.

8. Dispositif pour mettre en oeuvre le procédé selon l'une quelconque des revendications 1 à 7, comportant un réacteur incluant une colonne de coke pouvant être chauffée par induction, une extrémité de chargement côté tête pour la charge et une extrémité de chargement côté tête pour le coke ainsi qu'au moins une ouverture de coulée pouvant être fermée pour la coulée de métal et/ou de scories, **caractérisé en ce qu'**à l'extrémité côté tête est formé un espace central de chargement (4) pour la charge, lequel espace est entouré par un espace annulaire (5) pour la réception du coke, **en ce que** des buses (9) pour du vent chaud, de l'oxygène et/ou des gaz de combustion chauds ainsi qu'éventuellement des combustibles sont raccordées à l'espace annulaire contenant le coke (5), et **en ce que** l'espace annulaire contenant le coke (5) comporte une écluse résistante à la pression (3) au niveau de son extrémité froide côté tête, et **en ce que** des conduites d'évacuation (13) des gaz de réaction sont raccordées au réacteur sur ou sous le bord intérieur de l'espace annulaire contenant le coke (5).

9. Dispositif selon la revendication 8, **caractérisé en ce qu'**une pluralité de conduites d'alimentation en gaz (8, 15) et de conduites d'aspiration de gaz (13, 14) sont raccordées successivement au réacteur (1) dans la direction de la hauteur.

10. Dispositif selon la revendication 8 ou 9, **caractérisé en ce que** les conduites d'aspiration de gaz (13, 14) sont raccordées à des espaces annulaires, lesquels espaces sont formés en agrandissant progressivement la petite largeur du réacteur (1).

11. Dispositif selon la revendication 8, 9 ou 10, **caractérisé en ce que** l'écluse résistante à la pression (3) est configurée sous forme de fermeture à double cloche.

12. Dispositif selon l'une quelconque des revendications 9 à 11, **caractérisé en ce que** plusieurs réacteurs (1a, 1b, 1c) sont agencés en cascade les uns derrière les autres.

13. Dispositif selon l'une quelconque des revendications 9 12, **caractérisé en ce que** des conduites d'aspiration (13, 14) sont raccordées dans des zones du réacteur (1) soumises à une dépression qui génère un flux de gaz à partir du haut et du bas dans la conduite d'aspiration (13, 14).
